# EUROPÄISCHE PATENTSCHRIFT

(11) **EP 3 181 919 B1**
(45) Veröffentlichungstag und Bekanntmachung des Hinweises auf die Patenterteilung: **28.04.2021**
(21) Anmeldenummer: 16204122.2
(22) Anmeldetag: 14.12.2016
(51) Int. Cl.: F16B 37/14, F16B 41/00

(54) **INSTALLATIONSHALTEELEMENT MIT EINER MEHRZAHL VON VERSCHLUSSELEMENTEN**
INSTALLATION HOLDING ELEMENT WITH A PLURALITY OF CLOSURE ELEMENTS
ÉLÉMENT DE RETENUE D'INSTALLATION COMPRENANT UNE PLURALITÉ D'ÉLÉMENTS DE FERMETURE

(30) Priorität: 17.12.2015 DE 102015122097
(43) Veröffentlichungstag der Anmeldung: 21.06.2017
(73) Patentinhaber: Böllhoff Verbindungstechnik GmbH, 33649 Bielefeld (DE)
(72) Erfinder: Arndt, Andreas, 32689 Kalletal (DE); Betz, Maximilian, 93349 Mindelstetten (DE); Röhr, Andre, 32052 Herford-Elverdissen (DE); Tovar Escolar, Daniel, 33607 Bielefeld (DE)
(74) Vertreter: HWP Intellectual Property

(56) Entgegenhaltungen:
- DE-A1- 10 240 325
- JP-U- S6 144 014

## Beschreibung

### 1. Gebiet der Erfindung

Die vorliegende Erfindung betrifft ein Installationshalteelement für eine Mehrzahl von Verschlusselementen, ein Installationsverfahren für das Verschlusselement einer Antriebsmittelöffnung sowie ein Herstellungsverfahren für das Installationshalteelement mit einer Mehrzahl von Verschlusselementen.

### 2. Hintergrund der Erfindung

Im Stand der Technik sind verschiedene Verbindungselemente bekannt, die über eine Drehbewegung des Verbindungselements in ein Bauteil eingebracht werden. Die mithilfe eines Werkzeugs bereitgestellte Drehbewegung wird mithilfe eines Antriebselements des Werkzeugs, bspw. ein Bit, auf eine Antriebsmittelöffnung des Verbindungselements übertragen. Zu diesem Zweck weist die Antriebsmittelöffnung annähernd die komplementäre Form zur äußeren Gestalt des Antriebsmittels des Werkzeugs auf. Zu diesen Werkzeugformen zählen Kreuz-, Schlitz, Torxantriebsmittel, um hier nur einige Beispiele zu nennen. Diese Formen sind in korrespondierenden Normen, wie bspw. DIN-Normen festgelegt. Des Weiteren gibt es firmenspezifische Antriebsmittel, die ebenfalls mit der Innenkontur einer Antriebsmittelöffnung zusammenwirken.

Es besteht häufig das Interesse, die in ein Bauteil eingebrachten Verbindungselemente gegen ein unberechtigtes oder ein unerkanntes Lösen zu sichern. Zu diesem Zweck wird die jeweilige Antriebsmittelöffnung des Verbindungselements mithilfe eines entsprechenden Verschlusselements derart verschlossen, dass ein schnelles Lösen des Verbindungselements über die Antriebsmittelöffnung zumindest erschwert, wenn nicht sogar vollständig verhindert ist.

Gemäß CH 409 532 wird der vollständige Kopf einer Schlitzschraube durch eine geschlossene Plombe umgeben. In dieser Lösung dient die Plombe somit nicht ausschließlich dem Verschluss der Antriebsmittelöffnung, sondern der Verhinderung des kompletten Zugriffs auf den Schraubenkopf. GB 2 403 522 A beschreibt Schrauben, die als Antriebsmittelöffnungen eine Sechskantbohrung oder einen Schlitz aufweisen. Charakteristisch für diese Antriebsmittelöffnungen ist, dass sich diese Antriebsmittelöffnungen in Installationsrichtung des jeweiligen Verbindungselements, in diesem Fall in Einschraubrichtung der jeweiligen Schraube, vergrößern. Um das Lösen des Verbindungselements zu verhindern, wird in die Antriebsmittelöffnung nach Installation des Verbindungselements ein Einbettmaterial eingeschlagen. Zu diesen Einbettmaterialen zählen bspw. Weicheisen, Blei, Kupfer, Zink, Aluminium, Zinn oder ähnliche Materialien. Aufgrund der treibenden Kraft des Schlagwerkzeugs wird das Einbettmaterial in den sich aufweitenden Bereich der Antriebsmittelöffnung verdrängt, so dass es dadurch einen Hinterschnitt gegen das Herauslösen des Einbettmaterials aus der Antriebsmittelöffnung bildet. Im Hinblick auf das zu verwendende Material sowie den Aufwand beim Einschlagen und Verdrängen des Einbettmaterials in die Antriebsmittelöffnung ist dieses Installationsverfahren relativ aufwendig.

In DE 35 09 587 A1 wird eine Antriebsmittelöffnung der Sicherheitsschraube durch Einschlagen einer Kugel, eines Passstücks oder durch Einbringen eines Klebstoffs verschlossen. Um in diesem Zusammenhang den Verschluss der Antriebsmittelöffnung weiter zu sichern, besteht das Passstück aus gehärtetem Stahl. Diese Materialwahl verhindert, dass das Passstück mithilfe einer Bohrmaschine ausgebohrt wird. Des Weiteren wird dieses Passstück in Kombination mit einer Oberflächenrauigkeit oder Verzahnung geneigt entgegen der Einsetzrichtung verwendet, um das Passstück in der Antriebsmittelöffnung sicher zu befestigen. Diese Verzahnung verstärkt zwar einerseits den Presssitz des Passstücks in der Antriebsmittelöffnung, erhöht aber andererseits das Einschlagmoment für das Passstück in die Antriebsmittelöffnung, so dass hier nicht auf ein Schlagwerkzeug verzichtet werden kann. Die Nutzung des Schlagwerkzeugs birgt zudem die Gefahr, dass das Verbindungselement beschädigt wird.

DE 202 05 314 U1 nutzt zum Verschließen einer Antriebsmittelöffnung des Verbindungselements ein Verschlusselement mit Gewinde. Zu diesem Zweck ist an der Innenseite der Antriebsmittelöffnung ein Gewinde passend zum Gewinde des Verschlusselements vorgesehen. Entsprechend wird das Verschlusselement in die Antriebsmittelöffnung eingeschraubt und dort befestigt. Diese Lösung hat jedoch den Nachteil, dass nur mit einem geringen Teil von standardisierten Antriebsmittelformen tatsächlich ein Gewinde vereinbar ist.

Gemäß DE 20 2010 001 752 U1 wird durch Kaltverformung ein Siegelelement in die Antriebsmittelöffnung des Verbindungselements eingepresst. Während die Kaltverformung dafür sorgt, dass sich das Siegelmaterial, hier weiche verformbare Metalle oder Kunststoff, an die innere Kontur der Antriebsmittelöffnung anpasst, kann ebenfalls eine identifizierende Prägung in die Oberseite des Verschlusselements eingebracht werden. Aber diese Art des Verschlusselements erfordert die Nutzung eines Schlagwerkzeugs. Des Weiteren muss die zu verwendende Menge des Siegelmaterials auf die Öffnung abgestimmt sein, damit nicht übermäßig viel Material über die Antriebsmittelöffnung hinaus an der Oberseite des Verbindungselements verdrängt wird. Dies ist jedoch bei einer manuellen Anpassung der Menge des Siegelmaterials nur begrenzt möglich. Denn gemäß dem hier beschriebenen Verfahren wird bspw. Aluminium als Siegelmaterial eingesetzt und von einem Aluminiumrundstab in Abstimmung mit dem Volumen der zu verschließenden Antriebsmittelöffnung abgetrennt. Dieses Vorgehen bringt des Weiteren den Nachteil mit sich, dass bei einer zu geringen Menge an Siegelmaterial die Antriebsmittelöffnung entweder nicht ausreichend verschlossen ist oder aber das Verschlusselement nicht verlässlich in der Antriebsmittelöffnung gehalten wird.

Ein weiteres Verschlusselement ist in JP S61 44014 U beschrieben. Bei der hier beschriebenen Konfiguration ist ein hervorstehender oder vertiefter Abschnitt zum Herausziehen auf der Oberseite eines sechseckigen Säulenkörpers ausgebildet, der in eine Sechskantbuchse eines Kopfes eines angebrachten Bolzens eingepasst ist, um das Sechskantloch zu schließen.

Im Hinblick auf den oben diskutierten Stand der Technik stellt sich somit die Aufgabe, ein strukturell einfach aufgebautes Verschlusselement bereitzustellen, dass sich ebenfalls über ein einfaches Verfahren funktionsgerecht in die Antriebsmittelöffnung eines Verbindungselements einsetzen lässt. Dabei sollte gerade eine effiziente Gestaltung des Installationsverfahrens im Vordergrund stehen, welches den Werker auch mit einer ausreichenden Flexibilität in seinem Vorgehen ausstattet.

### 3. Zusammenfassung der Erfindung

Die obige Aufgabe wird durch ein Installationshalteelement gemäß dem unabhängigen Anspruch 1, durch ein Installationsverfahren gemäß dem unabhängigen Anspruch 10 sowie durch ein Herstellungsverfahren gemäß dem unabhängigen Anspruch 14 gelöst. Vorteilhafte Ausgestaltungen vorliegender Erfindung gehen aus der folgenden Beschreibung, den begleitenden Zeichnungen und den anhängenden Ansprüchen hervor.

Die vorliegende Beschreibung erläutert zunächst ein Verschlusselement einer Antriebsmittelöffnung eines Verbindungseiements, in die mit einem Werkzeug eingreifbar und über die das Verbindungselement bewegbar ist. Das Verschlusselement ist parallel zu seiner Längsachse manuell werkzeuglos in die Antriebsmittelöffnung einpressbar und nur über eine Reibschlussverbindung darin befestigbar. Das Verschlusselement weist eine Form auf, die durch mindestens eine Elementfläche und/oder mindestens eine Elementkante sowie eine Abschlussfläche bestimmt ist, wobei eine Längsachse des Verschlusselements in einer Einsetzrichtung des Verschlusselements in die Antriebsmittelöffnung verläuft und die mindestens eine Elementfläche und/oder die mindestens eine Elementkante zumindest in einem Teilbereich parallel und die Abschlussfläche annähernd senkrecht zur Längsachse des Verschlusselements angeordnet sind, wobei in einer Mehrzahl der parallelen Teilbereiche der mindestens einen Elementfläche und/oder der mindestens einen Elementkante geometrische Vorsprünge vorgesehen sind, die sich senkrecht zur Längsachse des Verschlusselements erstrecken, wodurch die Reibschlussverbindung des Verschlusselements erzielbar ist, und die ein geometrisches Übermaß des Verschlusselements bezogen auf Abmessungen der Antriebsmittelöffnung bestimmen, wobei die geometrischen Vorsprünge aus einer Mehrzahl von Erhebungen und/oder krummlinigen Haltestegen oder Rippen und/oder aus nicht senkrecht, aber winklig zur Längsachse orientierten, gerade verlaufenden Haltestegen oder Rippen bestehen.

Bei der Gestaltung eines möglichst einfach aufgebauten Verschlusselements wurde erkannt, dass gerade die parallel zur Einsetzrichtung des Verbindungselements und des Verschlusselements verlaufenden Elementflächen und/oder Elementkanten geeignete Anlageflächen für eine Reibschlussverbindung zwischen Verschlusselement und Verbindungselement bereitstellen. Denn die derart orientierten Elementflächen und Elementkanten gewährleisten ein leichtes Einsetzen des Verschlusselements ohne die Verwendung von Schlagwerkzeugen. Zudem ist es nicht erforderlich, das Verschlusselement in ein sich öffnendes Volumen der Antriebsmittelöffnung in Einsetzrichtung hineinzupressen oder dort zu verformen. Vielmehr wird anstelle eines solchen durch Materialverformung erzielten Hinterschnitts eine Reibschlussverbindung zwischen den Elementflächen und/oder Elementkanten des Verschlusselements und den gegenüber angeordneten entsprechenden Flächen und/oder Kanten der Antriebsmittelöffnung hergestellt. Mögliche Zwischenräume zwischen sich gegenüberliegenden Flächen und Kanten werden mit den geometrischen Vorsprüngen senkrecht zur Einsetzrichtung des Verschlusselements überbrückt und sorgen für eine Reibschlussverbindung zwischen diesen sich gegenüberliegenden Flächen und Kanten. Um ein Einsetzen des Verschlusselements zu erleichtern und ein Herauslösen zu erschweren, sind die geometrischen Vorsprünge in ihrer Größe, Form und vor allem in ihrem Verlauf bezogen auf die Einsetzrichtung anpassbar. Daher ist es von Vorteil, wenn diese geometrischen Vorsprünge bspw als winklig verlaufende Haltestege oder Rippen oder auch als punktuelle Erhebungen an konstruktiv stabilisierenden Punkten zwischen Verbindungselement und Verschlusselement angeordnet sind.

Die geometrischen Vorsprünge des Verschlusselements können ein geometrisches Übermaß bezogen auf Abmessungen der Antriebsmittelöffnung aufweisen. Gemäß einem weiteren Beispiel besitzt das Verschlusselement eine komplementär zur Antriebsmittelöffnung ausgebildete Form, wobei die komplementäre Form vorzugsweise an eine Torx-, Kreuz- oder andere standardisierte Form einer Antriebsmittelöffnung angepasst ist, insbesondere einer Form eines in die Antriebsmittelöffnung eingreifenden Antriebsmittels oder Werkzeugs entspricht. Um eine optimale Anpassung des Verschlusselements an die Antriebsmittelöffnung von Verbindungselementen zu realisieren, sind die Verschlusselemente komplementär zur Antriebsmittelöffnung geformt. Dies hat zur Folge, dass die Verschlusselemente entsprechend einer Werkzeugspitze, bspw. entsprechend eines Bits eines Akkuschraubers, geformt sind, mit dem das Verbindungselement durch Eingreifen des Werkzeugs in die Antriebsmittelöffnung bewegbar ist. Da ein derartiges Werkzeug eine komplementäre Form zur Antriebsmittelöffnung bereitstellt, ist das Verschlusselement durch Übernahme dieser Form optimal an die auszufüllenden Volumina der Antriebsmittelöffnung angepasst. Um einen verlässlichen Sitz des Verschlusselements der Antriebsmittelöffnung sicherzustellen, realisieren die oben beschriebenen geometrischen Vorsprünge an den komplementär zur Antriebsmittelöffnung ausgebildeten Formen des Verschlusselements ein geometrisches Übermaß, so dass das Verschlusselement in der jeweiligen Antriebsmittelöffnung geklemmt wird.

Gemäß einem weiteren Beispiel besteht das Verschlusselement aus einem Thermoplast, einem Duroplast, einem Elastomer oder einem Hybrid mit oder ohne Faserverstärkung. Hybrid bedeutet in diesem Zusammenhang, dass sich das Bauteil insbesondere aus einem Materialmix oder aus Komponenten unterschiedlicher Materialien zusammensetzt. Diese Materialwahl erleichtert die Vorfertigung der in die Antriebsmittelöffnung einzusetzenden Verschlusselemente. Entsprechend werden die Verschlusselemente in ihrer Form angepasst an die Antriebsmittelöffnung hergestellt, so dass sie nachfolgend nur noch eingedrückt werden müssen. Bei diesem beispielsweise manuellen Eindrücken des Verschlusselements in die Antriebsmittelöffnung ist aufgrund der Anpassung des Verschlusselements weder die Verwendung eines Schlagwerkzeugs erforderlich noch besteht die Notwendigkeit für eine Materialverdrängung innerhalb der Antriebsmittelöffnung. Dieses Vorgehen erleichtert insgesamt das Verschließen der Antriebsmittelöffnung und reduziert den Zeitaufwand zur Absicherung des in ein Bauteil eingebrachten Verbindungselements.

Gemäß einem weiteren Beispiel ist das mindestens eine Verschlusselement, beispielsweise eine Mehrzahl von Verschlusselementen über jeweils einen lösbaren Haltesteg an einem Installationshalteelement integral und lösbar befestigt. Im Hinblick auf dieses Beispiel dient das Installationshalteelement einer vereinfachten Handhabung und somit Einsetzmöglichkeit des Verschlusselements in die Antriebsmitteiöffnung.

Vorliegende Erfindung offenbart ein Installationshalteelement, mit dem eine Mehrzahl von Verschlusselementen jeweils einer Antriebsmittelöffnung eines Verbindungselements bereitstellbar und in der Antriebsmittelöffnung des Verbindungselements manuell werkzeugios installierbar ist, wobei das Installationshalteelement die folgenden Merkmale aufweist: ein Halteelement, an dem die Mehrzahl von Verschiusselementen, vorzugsweise ein Verschlusselement gemäß den oben beschriebenen Konstruktionsalternativen, integral und lösbar befestigt ist, wobei das Halteelement einen Griffbereich umfasst, mit dem ein einzelnes Verschlusselement ohne Werkzeug über eine manuelle Handhabung des Installationshalteelements in einer Aufnahmeöffnung eines Verbindungselements installierbar und von dem Halteelement lösbar ist. Weiterhin bevorzugt umfasst das Halteelement eine flächige Form, so dass die flächige Form eine manuelle Angriffsfläche zum Bewegen, insbesondere zum Drehen, des Installationshalteelements bereitstellt.

Die Praxis hat gezeigt, dass die Handhabung einzelner Verschlusselemente zum Einsetzen in eine Antriebsmittelöffnung zeitaufwendig und unpraktikabel ist. Daher wurde das erfindungsgemäße Installationshalteelement entwickelt, welches bevorzugt flächig ausgebildet ist und eine umlaufende Umfangsfläche aufweist. An dieser Umfangsfläche sind vorzugsweise gleichmäßig beabstandet einzelne Verschlusselemente über Haltestege angeordnet bzw. an dem Halteelement lösbar befestigt. Somit stellt das Installationshalteelement einerseits ein Magazin zur nicht-losen Gruppierung von einer Mehrzahl an Verschlusselementen bereit. Des Weiteren stellt das Installationshalteelement sicher, dass ein Werker einzelne Verschlusselemente bequem über das Halteelement greifen kann, so dass diese in die Antriebsmittelöffnung einsetzbar und daran anschließend von dem Halteelement lösbar sind. Da aufgrund der Formgestaltung des Halteelements ausreichende manuelle Kräfte auf das Verschlusselement durch den Werker aufbringbar sind, sind ein verlässliches Einsetzen des Verschlusselements in der Antriebsmittelöffnung und ein Lösen des Verschlusselements von dem Installationselement garantiert. Das bevorzugte Halteelement stellt über seine manuelle Angriffsfläche sicher, dass der Werker aufgrund seiner manuell aufzubringenden Kraft ein verlässliches Drehmoment zum Trennen des Verschlusselements vom Halteelement erzielt.

Gemäß einer weiteren bevorzugten Ausführungsform vorliegender Erfindung ist das Verschlusselement parallel zu seiner Längsachse manuell werkzeuglos in die Antriebsmittelöffnung einpressbar und nur über eine Reibschlussverbindung darin befestigt. Somit lässt sich das Installationsverfahren für das Verschlusselement folgendermaßen zusammenfassen: Aufnehmen eines Installationshalteelements A mit einem Griffbereich zur manuellen Handhabung und mit einer Mehrzahl lösbar befestigter Verschlusselemente, vorzugsweise das oben beschriebene Installationshalteelement, Ausrichten eines Verschlusselements auf die Antriebsmittelöffnung und Einsetzen des Verschlusselements in die Antriebsmittelöffnung über eine geradlinige Bewegung ohne Verwendung eines Werkzeugs und Bewegen des Installationshalteelements relativ zum eingesetzten Verschlusselement und dadurch Lösen des Verschlusselements vom Installationshalteelement. Zudem ist es bevorzugt, das Verschlusselement manuell in die Aufnahmeöffnung einzudrücken und/oder das Installationshalteelement um eine Längsachse des Verschlusselements und relativ zum Verschlusselement zu drehen, während das Verschlusselement in der Antriebsmittelöffnung gehalten wird. Auf diese Weise wird der Steg zwischen Verschlusselement und Halteelement unterbrochen und das Verschlusselement vom Halteelement gelöst. Dieses Lösen wird bevorzugt durch eine Sollbruchstelle im verbindenden Steg unterstützt.

Vorliegende Erfindung offenbart zudem ein Herstellungsverfahren für das Installationshalteelement mithilfe eines Spritzgussverfahrens. Das Herstellungsverfahren weist die folgenden Schritte auf: Bereitstellen einer Spritzgussund/oder Pressform für eine Ausführungsform des oben beschriebenen Instaliationshalteelements, Spritzgießen des Installationshalteelements in der Spritzguss- und/oder Pressform und Entformen des Installationshalteelements aus der Spritzguss- und/oder Pressform. In diesem Zusammenhang ist es bevorzugt, eine Mehrzahl von Kunststoffen zum Spritzgießen, die unterschiedliche Farben aufweisen, bereitzustellen und/oder eine Codierung auf der Abschlussfläche des Verschlusselements zur Identifikation eines Verschlussvorgangs mit einem Verschlusselement aufzubringen.

Weiterhin erläutert die Beschreibung ein Verbindungselement mit einer Antriebsmittelöffnung, wobei ein Verschlusselement gemäß den oben beschriebenen Konstruktionsalternativen in der Antriebsmittelöffnung installiert ist.

### 4. Kurze Beschreibung der begleitenden Zeichnung

Die bevorzugten Ausführungsformen vorliegender Erfindung werden unter Bezugnahme auf die begleitende Zeichnung näher erläutert. Es zeigen:
- Fig. 1: eine perspektivische Darstellung eines beispielhaften Verbindungselements gemäß DIN 912 mit einer Antriebsmittelöffnung in Form eines Innensechskants,
- Fig. 2: eine erste bevorzugte Ausführungsform des erfindungsgemäßen Installationshaiteelements mit daran befestigten Verschlusselementen,
- Fig. 3: eine weitere bevorzugte Ausführungsform des Installationshalteelements mit einer Mehrzahl von Ver-schiusselementen,
- Fig. 4: eine vergrößerte perspektivische Ansicht eines Beispiels eines Verschlusselements,
- Fig. 5: eine vergrößerte perspektivische Ansicht eines weiteren Beispiels eines Verschlusselements,
- Fig. 6a: eine weitere bevorzugte Ausführungsform eines Installationshalteelements,
- Fig. 6b: eine vergrößerte Darstellung des Verschlusselements aus Fig. 6a,

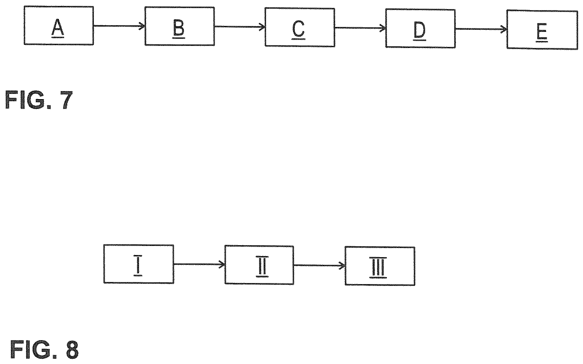

- Fig. 7: ein Flussdiagramm einer bevorzugten Ausführungsform des erfindungsgemäßen Installationsverfah-rens und
- Fig. 8: ein Flussdiagramm einer bevorzugten Ausführungsform des erfindungsgemäßen Herstellungsverfah-rens.

### 5. Detaillierte Beschreibung der bevorzugten Ausführungsformen

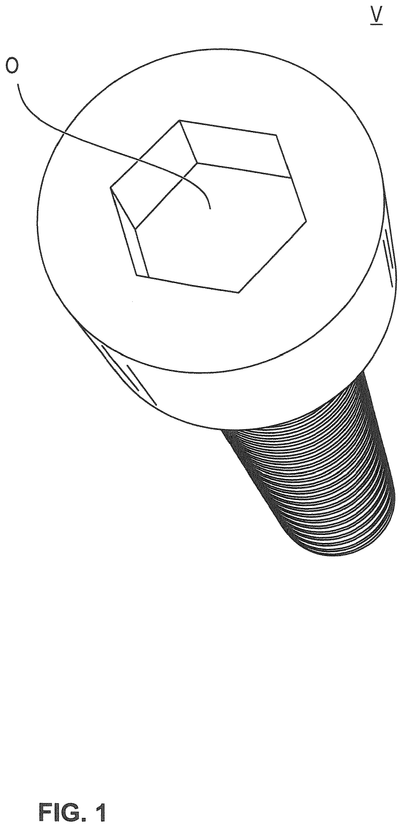

In Figur 1 ist ein Verbindungselement V mit einer Antriebsmittelöffnung O gezeigt, auf welches beispielgebend für die verschiedensten Verbindungsmittel mit Antriebsmittelöffnung zur Erläuterung vorliegender Erfindung Bezug genommen wird. Die Antriebsmittelöffnung O weist gemäß der hier gezeigten Ausführungsform einen Innensechskant auf, so dass man mit Hilfe eines eingreifenden Sechskant-Inbusschlüssel das Verbindungselement V drehen kann. Die Antriebsmittelöffnung O ist vorzugsweise unterschiedlich geformt. Angepasst an die Form der Antriebsmittelöffnung O ist zumindest die eingreifende Spitze des Werkzeugs zum Installieren des Verbindungselements V. Daher ist die eingreifende Spitze des Werkzeugs komplementär zur Antriebsmittelöffnung geformt. Die Form bzw. Geometrie der Antriebsmittelöffnung O und des eingreifenden Werkzeugs (nicht gezeigt) ist vorzugsweise in offiziellen Standards, hier DIN 912, (siehe unten) und firmenspezifischen Standards definiert und aus diesen bekannt. Um die Antriebsmittelöffnung O zu verschließen ist es daher bevorzugt, ein Verschlusselement 30; 30' (siehe unten) zu nutzen, dessen Form annähernd der Form der eingreifenden Spitze des bekannten Werkzeugs entspricht.

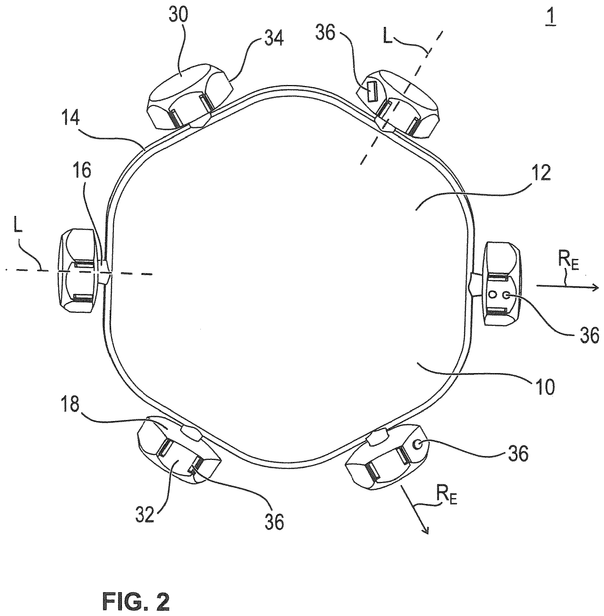

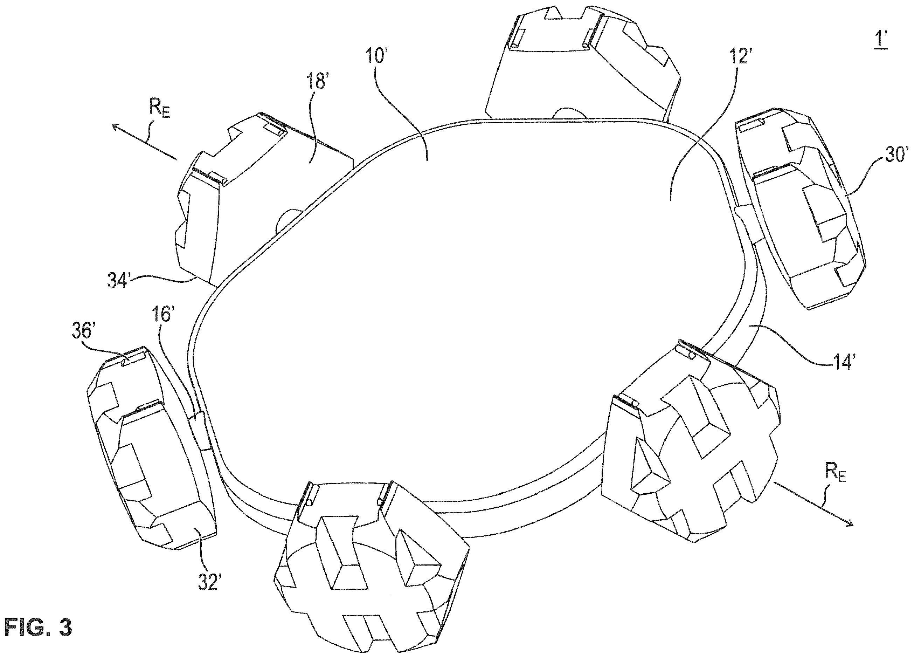

In den Figuren 2 und 3 sind jeweils in einer perspektivischen Ansicht zwei bevorzugte Ausführungsformen des Installationshalteelements 1; 1' gezeigt. Diese umfassen ein zentrales Halteelement 10; 10', was der Handhabung, Speicherung und Installation einer Mehrzahl von Verschlusselementen 30; 30' dient.

Das Halteelement 10; 10' stellt einen Griffbereich 12; 12' bereit, so dass ein Werker das Installationshalteelement 1; 1' verlässlich halten, gezielt bewegen und nötige Installationskräfte auf die Verschlusselemente 30; 30' aufbringen kann. Daher ist das Halteelement 10; 10' bevorzugt flächig ausgebildet, wobei die Form dieser Fläche beliebig ist Um eine ausreichende Stabilität bereitzustellen, weist das Halteelement 10; 10' eine bestimmte Dicke auf. Diese liegt in einem Bereich von ca. 1 - 6 mm, vorzugsweise 1,5 - 4 mm.

Die oben genannte Dicke des Halteelements führt zu einer umfänglich angeordneten umlaufenden Seitenfläche 14; 14'. Die Seitenfläche 14; 14' dient bevorzugt einer lösbaren Befestigung der Mehrzahl von Verschlusselementen 30; 30'. Zu diesem Zweck sind die Verschlusselemente 30; 30' bevorzugt über einzelne integrale Haltestege 16; 16' mit den Verschlusselementen 30; 30' verbunden. Die Haltestege 16; 16' sind integral mit dem Halteelement 10; 10' und dem Verschlusselement 30; 30' verbunden. Nach erfolgter Installation des Verschlusselements 30; 30' in einer Antriebsmittelöffnung (nicht gezeigt) sind die Verschlusselemente 30; 30' von den Haltestegen 16; 16' und daher auch von dem Halteelement 10; 10' entfernbar. Es ist ebenfalls bevorzugt, die Verschlusselemente 30; 30' im Griffbereich 12; 12' über Haltestege zu befestigen.

Um eine Anzahl von bevorzugt drei bis zwölf Verschlusselementen 30; 30' am Griffbereich 12; 12' befestigen zu können, weist der Griffbereich 12; 12' vorzugsweise eine runde oder eine polygonale oder eine viereckige oder eine dreieckige Form auf. Die Form des Griffbereichs 12; 12' wird in Abstimmung mit der Anzahl zu speichernder bzw. an dem Griffbereich 12; 12' zu befestigender Verschlusselemente 30; 30' gewählt. Dabei ist maßgeblich, dass trotz der Speicherung mehrerer Verschlusselemente 30; 30' jedes Verschlusselement 30; 30' einzeln ohne gegenseitige Behinderung in einer Antriebsmittelöffnung (nicht gezeigt) installierbar ist.

Bevorzugt besteht das Installationshalteelement 1;1' aus einem Thermoplast, einem Duroplast, einem Elastomer oder einem Hybrid mit oder ohne Faserverstärkung. Die Materialwahl stellt damit eine ausreichende Elastizität der Verschlusselemente 30; 30' sicher, so dass die Verschlusselemente 30; 30' jeweils manuell ohne Verwendung eines Werkzeugs in der Antriebsmittelöffnung installierbar sind. In enger Abstimmung mit der Materialwahl erfolgt die konstruktive Gestaltung der Verschlusselemente 30; 30'. Denn beim Installieren der Verschlusselemente 30; 30' in der Antriebsmittelöffnung sollen geometrische Vorsprünge 20; 20' (siehe unten) für einen Reibschlussverbund und somit einen festen Sitz des Verschlusselements 30; 30' in der Antriebsmittelöffnung sorgen. Daher verformen sich bevorzugt nur die geometrischen Vorsprünge 20; 20' zur Herstellung des Presssitzes. Entsprechend kann ein Material mit relativ hoher Stabilität für die Herstellung der Verschlusselemente 30; 30' gewählt werden, da für eine verlässliche Reibschlussverbindung im Wesentlichen die geometrischen Vorsprünge 20; 20' und deren Verformung, nicht aber die Verformung des ganzen Verschlusselements 30; 30' erforderlich ist. In diesem Zusammenhang ist eine konkrete Materialwahl für das Installationshalteelement 1; 1' PBT-GF-30, um nur ein Beispiel zu nennen.

Es ist ebenfalls bevorzugt, das Installationshalteelement 1; 1' als Hybridbauteil herzustellen. Während das Halteelement 10; 10' aus einem stabilen Kunststoff zur Gewährleistung ausreichender Stabilität beim Installationsverfahren besteht, werden die Verschlusselemente 30; 30' aus einem Werkstoff größerer Elastizität hergestellt. In gleicher Weise ist es denkbar, die Mehrzahl von Verschlusselementen 30; 30' aus unterschiedlichen Materialien an das Halteelement 10;10' anzuspritzen. Entsprechend könnte mit diesem Spektrum an Materialien auf unterschiedliche Umgebungsbedingungen, wie bspw. chemische Belastungen Bezug genommen werden. Zudem ist es bevorzugt, Verschlusselemente 30; 30' unterschiedlicher Größe und/oder unterschiedlicher farblicher Gestaltung an einem Halteelement 10; 10' vorzusehen. In gleicher Weise ist es bevorzugt, Installationshalteelemente 1; 1' mit nur einer Größe und einer Farbe von Verschlusselementen 30; 30' herzustellen.

Wie anhand der in Figur 2 gezeigten bevorzugten Ausführungsform des Installationshalteelements 1; 1' beispielhaft für die allgemeine Gestaltung der Verschlusselemente 30; 30' gezeigt ist, sind die Verschlusselemente 30; 30' ähnlich einem in die standardisierte Antriebsmittelöffnung eingreifenden Werkzeugs, hier ein Inbusschlüssel als Innensechskantkraftangriff geformt. Daher passt das Verschlusselement 30 in die Antriebsmittelöffnung einer Inbusschraube. Generell sind Verbindungselemente, bspw. Schrauben, mit gängigen Formen von Antriebsmittelöffnungen ausgestattet. Diese sind unter verschiedenen Bezeichnungen standardisiert, wie bspw. eine Antriebsmittelöffnung in Torx-, Kreuz- oder Inbusform (Innensechskant). Die genauen Geometrien der Antriebsmittelöffnungen und des in die Antriebsmittelöffnung eingreifenden Werkzeugs sind in Standards, wie bspw. eine DIN-Norm, festgelegt und daher bekannt. Zu diesen DIN-Normen zählen u.a. DIN 7985, DIN 7984, ISO 7380-2, ISO 4762, DIN 7991 und ähnliche. Somit sind aus diesen Standards, seien es offizielle Standards, wie DIN-Normen, ASME-Normen oder dergleichen oder unternehmensspezifische Standards, die passgenauen Geometrien der Verschlusselemente 30; 30', also eigentlich der Antriebswerkzeuge, die die Antriebsmittelöffnung ausfüllen, bekannt. Daher werden diese Standards zur Definition der Geometrien der Verschlusselemente 30; 30' und der Antriebsmittelöffnung durch Bezugnahme aufgenommen.

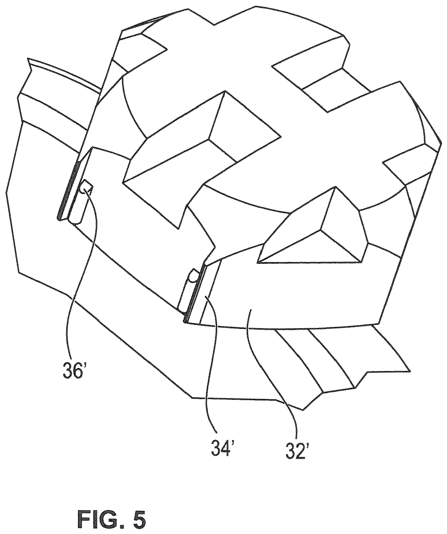

Wie man anhand der Figuren 2 bis 6 erkennen kann, weist das Verschlusselement 30; 30' eine Mehrzahl von Elementflächen 32; 32' und eine Mehrzahl von Elementkanten 34; 34' auf. Diese sind bevorzugt gegenüberliegend zu passenden Flächen und Kanten der Antriebsmittelöffnung angeordnet, sobald das Verschlusselement 30; 30' in die Antriebsmittelöffnung eingesetzt worden ist.

Wie in den Figuren 2 und 3 gezeigt ist, werden die Verschlusselemente 30 parallel zu ihrer Längsachse L in einer Einsetzrichtung R_{E} in die Antriebsmittelöffnung eingesetzt. Dazu greift der Werker ohne ein Werkzeug manuell das Installationshalteelement 1; 1' über ein zentrales Halteelement 10 und bewegt das einzelne Verschlusselement 30; 30' in eine gegenüberliegend angeordnete Antriebsmittelöffnung Die Bewegung wird allein durch ein Eindrücken des Verschlusselements 30; 30' in die Antriebsmittelöffnung erzielt, ohne dass dazu Werkzeuge oder andere Hilfsmittel erforderlich sind.

Um eine verlässliche Reibschlussverbindung zwischen dem Verschlusselement 30; 30' und der Antriebsmittelöffnung bzw. einen Presssitz in der Antriebsmittelöffnung zu erzielen, sind gemäß einer bevorzugten Ausführungsform vorliegender Erfindung geometrische Vorsprünge 36; 36' an dem Verschlusselement 30; 30' vorgesehen. Diese geometrischen Vorsprünge 36; 36' erstrecken sich senkrecht zur Längsachse L des Verschlusselements 30; 30', die parallel zur Einsetzrichtung R_{E} angeordnet ist. Vorzugsweise sind die geometrischen Vorsprünge 36; 36' in Teilbereichen der Elementfläche 32 und/oder der Elementkante 34 angeordnet, die parallel zur Längsachse L des Verschlusselements 30; 30' laufen bzw. angeordnet sind. Die geometrischen Vorsprünge 36; 36' sind derart dimensioniert, dass sie für das Verschlusselement 30; 30' bezogen auf die aufnehmende Antriebsmittelöffnung ein geometrisches Übermaß definieren. Das bedeutet, dass aufgrund des mindestens einen geometrischen Vorsprungs 36; 36' das Verschlusselement 30; 30' größer dimensioniert ist als die Ausdehnung der aufnehmenden Antriebsmittelöffnung. Vorzugsweise sind die geometrischen Vorsprünge 36 derart dimensioniert, dass sie ein Übermaß des Verschlusselements 30; 30' bezogen auf die Antriebsmittelöffnung bzw. bezogen auf die Abmessungen des Verschlusselements 30 ohne geometrische Vorsprünge 36 in dem Bereich von ungefähr 1 bis 15 %, bevorzugt 2 bis 8 %, erzeugen. Dieses Übermaß wird in Abhängigkeit vom Material des Verschlusselements 30 gewählt. Daher ist bei einem härteren Material das Übermaß geringer als bei einem weicheren Material, um einen optimalen Presssitz und die damit verbundene Reibschlussverbindung des Verschlusselements 30; 30' in der Antriebsmittelöffnung zu erzielen. Bei elastischeren Werkstoffen, wie bspw. Silikon für das Verschlusselement 30; 30', das vorzugsweise in einer VA-Schraube in der Lebensmittelindustrie eingesetzt wird, sind auch größere geometrische Übermaße als die oben genannten bevorzugt.

Wie man anhand der begleitenden Zeichnungen erkennen kann, sind die geometrischen Vorsprünge 36; 36' vorzugsweise angrenzend an lastabtragende Elementkanten 34; 34' auf den benachbarten Elementflächen 32; 32' angeordnet. Weiterhin bevorzugt sind die geometrischen Vorsprünge 36; 36' auf den Elementkanten 24 angeordnet. Aufgrund ihrer Anordnung haben die geometrischen Vorsprünge 36; 36' bevorzugt einen Wirkanteil in Längsrichtung L des Verschlusselements 30; 30'.

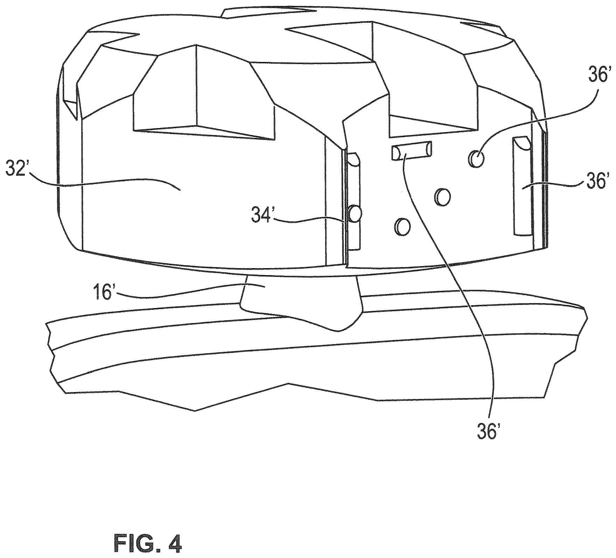

Gemäß unterschiedlicher bevorzugter Ausführungsformen vorliegender Erfindung sind die geometrischen Vorsprünge 36 als eine Erhebung senkrecht zur Längsachse L und/oder als krummlinig verlaufende Haltestege oder Rippen und/oder als nicht senkrecht, aber winklig zur Längsachse L orientierten gerade verlaufenden Haltestegen oder Rippen aufgebaut, die senkrecht zur Längsachse L erhoben sind. Es ist ebenfalls bevorzugt, Erhebungen und Haltestege miteinander zu kombinieren, wie es bspw. in Figur 4 gezeigt ist.

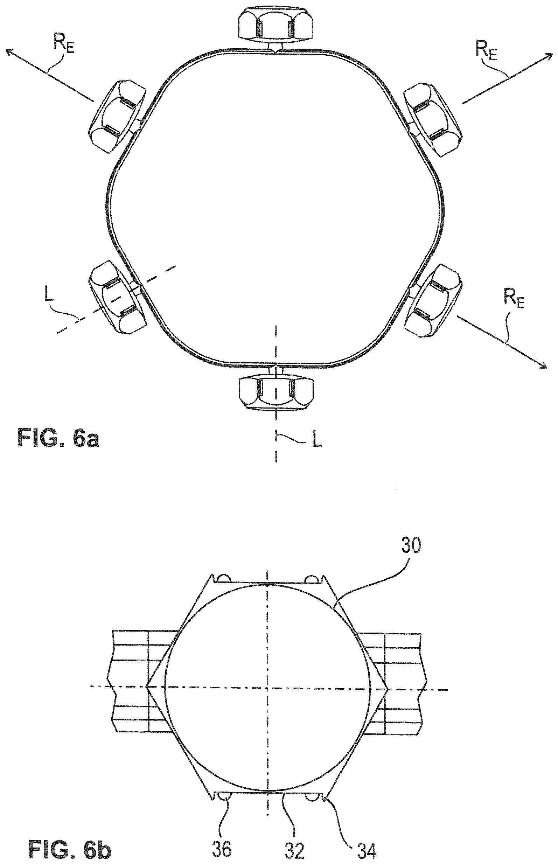

Gemäß Figur 6b verlaufen die geometrischen Vorsprünge 36 bevorzugt als geradlinige Haltestege parallel zur Längsachse L auf der Elementfläche 32 und in unmittelbarer Nachbarschaft zur Elementkante 34. Figur 4 zeigt die Anordnung einer Mehrzahl von Erhebungen 36 auf der Elementfläche 32 oder Erhebungen auf einem Haltesteg.

Gemäß einer anderen bevorzugten Ausführungsform vorliegender Erfindung wird das Übermaß des Verschlusselements 30; 30' bezogen auf die Antriebsmittelöffnung nicht durch geometrische Haltestege 36 sondern durch vergrößerte Abmessungen des Verschlusselements 30; 30' selbst erzeugt. Somit weist bevorzugt das Verschlusselement 30 in Bezug auf die geometrischen Abmessungen der standardisierten Antriebsmittelöffnung ein geometrisches Übermaß in dem bereits oben definierten Bereich bezogen auf die geometrischen Abmessungen der standardisierten Antriebsmittelöffnung auf.

Wie man ebenfalls anhand der Figuren erkennen kann, sind die Verschlusselemente 30; 30' bevorzugt über die einzelnen Haltestege 16; 16' mit dem Halteelement 10; 10' verbunden. Die Haltestege 16; 16' enden an einer Abschlussfläche 18; 18' des Verschlusselements 30; 30', die bevorzugt senkrecht zur Längsachse L des Verschlusselements 30; 30' angeordnet ist. Ein senkrechter Verlauf der Abschlussfläche 18; 18' schließt ein, dass die Abschlussfläche 18; 18' gewellt, profiliert, gewölbt oder ähnlich ausgestaltet ist. Im Wesentlichen bildet sie aber die Verschlussfläche der Antriebsmittelöffnung, die ähnlich einem Deckel eines Gefäßes im Wesentlichen senkrecht dazu angeordnet ist.

Zur Installation des Verschlusselements 30; 30' nimmt der Werker im Schritt A zunächst das Installationshalteelement 1; 1' über den Griffbereich 12; 12' in die Hand. Da der Griffbereich 12; 12' eine ausreichende Angriffsfläche zum Bewegen und zum Aufbringen einer gewissen Installationskraft auf das Verschlusselement 30; 30' bereitstellt, ist der Werker in der Lage, das Verschlusselement 30; 30' mithilfe des Halteelements 10; 10' in die Antriebsmittelöffnung einzusetzen (Schritt C). Dem geht voraus, dass der Werker manuell das Verschlusselement 30; 30' in seiner Orientierung auf die Antriebsmittelöffnung ausrichtet, so dass die Form von Antriebsmittelöffnung und Verschlusselement 30; 30' passgenau zueinander ausgerichtet sind (Schritt B). Nachdem das Verschlusselement 30; 30' über eine Reibschlussverbindung verlässlich in der Antriebsmittelöffnung befestigt worden ist, trennt der Werker das Verschlusselement 30; 30' von dem Halteelement 10; 10' ab (Schritt D). In diesem Zusammenhang wird vorzugsweise der Haltesteg 16; 16' gebrochen, um das Verschlusselement abzutrennen. Daher ist es bevorzugt, eine Sollbruchstelle im Haltesteg 16; 16' angrenzend an die Abschlussfläche 18; 18' vorzusehen. Es ist ebenfalls bevorzugt, durch Drehung des Halteelements 10; 10' relativ zum in der Antriebsmittelöffnung fest angeordneten Verschlusselements 30; 30' den Haltesteg 16; 16' und somit das Halteelement 10; 10' vom Verschlusselement 30; 30' zu trennen. Gemäß einer weiteren Verfahrensalternative wird der Haltesteg 16; 16' vom Verschlusselement 30; 30' abgeschnitten. Insgesamt ist bezogen auf das Installationsverfahren hervorzuheben, dass das Installationsverfahren ohne Werkzeug erfolgt. Das Verschlusselement 30; 30' wird daher allein durch die durch den Werker aufzubringenden Kräfte und ohne ein Schlagwerkzeug in der Antriebsmittelöffnung installiert.

Nachdem ein erstes Verschlusselement 30; 30' in einer Antriebsmittelöffnung installiert worden ist und das Verschlusselement 30; 30' von dem Installationshalteelement 1; 1' getrennt worden ist, wird ein weiteres Verschlusselement 30; 30', das am Installationshalteelement 1;1' befestigt ist, auf eine weitere Antriebsmittelöffnung ausgerichtet. Dazu dreht man vorzugsweise das Installationshalteelement 1; 1' in der Ebene des Halteelements 10; 10'. Natürlich ist es ebenfalls bevorzugt, in beliebigen Raumrichtungen das Installationshalteelement 1; 1' zu drehen, um ein weiteres Verschlusselement 30; 30' gegenüber einer noch leeren Antriebsmittelöffnung auszurichten. Danach wiederholt sich das oben beschriebene Installationsverfahren, um das Verschlusseiement 30; 30' in der Antriebsmittelöffnung anzuordnen.

Zur Herstellung des Installationshalteelements 1; 1' wird zunächst im Schritt I eine komplementär zum Installationshalteelement 1;1' gestaltete Spritzguss-/Pressform bereitgestellt. Nachfolgend wird im Schritt II die Spritzguss-/Pressform mit einem gewünschten Kunststoff gefüllt, also das Installationshalteelement 1; 1' spritzgegossen (Schritt II). Dazu kann der Kunststoff eine Faserverstärkung aufweisen oder auch nicht. Im weiteren Schritt III wird das Installationshalteelement 1;1' aus der Spritzguss-/Pressform entformt. Im Rahmen des Herstellungsverfahrens ist es ebenfalls bevorzugt, eine Mehrzahl von Kunststoffen zum Spritzgießen bereitzustellen. Diese öffnet vorzugsweise die Möglichkeit, das Installationshalteelement 1; 1' in unterschiedlichen Farben oder auch mit unterschiedlichen Kunststoffhärtegraden zu produzieren. Eine weitere bevorzugte Ausführungsform sieht das Aufbringen einer Codierung auf der Abschlussfläche 18; 18' des Verschlusselements 30; 30' vor. Unterschiedliche Farben der Installationshalteelemente 1; 1' und der damit verbundenen Verschlusselemente 30; 30' dienen bevorzugt der Zuordnung der Verschlusselemente 30; 30' zu einem persönlichen Werker. Zudem heben unterschiedliche Farben gemäß einer weiteren bevorzugten Ausführungsform hervor, dass ein bestimmter Arbeitsgang abgeschlossen worden ist, bspw. das Verbindungselement mit einem vordefinierten Drehmoment angezogen worden ist. Eine oben genannte Codierung auf der Abschlussfläche dient bevorzugt allein oder in Kombination mit einer bestimmten Farbe des Verschlusselements 30; 30' der Identifikation eines Verschlussvorgangs oder eines Werkers, der Kennzeichnung eines bestimmten Datums der Bearbeitung, der Identifizierung einer bestimmten bearbeitenden Abteilung, Firma oder dgl.

### Bezugszeichenliste

- 1; 1': Installationshalteelement
- 10; 10': Halteelement
- 12; 12': Griffbereich
- 14; 14': Seitenfläche
- 16; 16': Haltesteg
- 18; 18': Abschlussfläche
- 30; 30': Verschlusselement
- 32; 32': Elementfläche
- 34; 34': Elementkante
- 36; 36': Geometrischer Vorsprung
- R_{E}: Einsetzrichtung
- V: Verbindungselement
- O: Antriebsmittelöffnung
- L: Längsachse des Verschlusselements
- I: Bereitstellen einer Spritzguss- und/oder Pressform
- II: Spritzgießen
- III: Entformen
- A: Aufnehmen eines Installationshalteelements
- B: Ausrichten eines Verschlusselements
- D: Bewegen des Installationshalteelements
- E: Drehen des Installationshalteelements

## Patentansprüche

1. Installationshalteelement (1; 1'), mit dem eine Mehrzahl von Verschlusselementen (30; 30') einer Antriebsmittelöffnung eines Verbindungselements bereitstellbar und in der Antriebsmittelöffnung des Verbindungselements manuell werkzeuglos installierbar ist, das die folgenden Merkmale aufweist:
a. ein Halteelement (10; 10'), an dem die Mehrzahl von Verschlusselementen (30; 30') integral und lösbar befestigt ist, wobei
b. das Halteelement (10; 10') einen Griffbereich (12; 12') umfasst, mit dem ein einzelnes Verschlusselement (30; 30') ohne Werkzeug über eine manuelle Handhabung des Installationshalteelements (1; 1') in einer Aufnahmeöffnung eines Verbindungselements installierbar und von dem Halteelement (10; 10') lösbar ist.

2. Installationshalteelement (1; 1') gemäß Anspruch 1, dessen Halteelement (10; 10') eine flächige Form aufweist, so dass die flächige Form eine manuelle Angriffsfläche zum Bewegen, insbesondere zum Drehen, des Installationshalteelements (1; 1') bereitstellt.

3. Installationshalteelement (1; 1') gemäß Anspruch 1 oder 2, in dem das Verschlusselement (30; 30') parallel zu seiner Längsachse (L) manuell werkzeuglos in die Antriebsmittelöffnung einpressbar und nur über eine Reibschlussverbindung darin befestigbar ist,
das Verschlusselement (30; 30') eine Form aufweist, die durch mindestens eine Elementfläche (32; 32') und/oder mindestens eine Elementkante (34; 34') sowie eine Abschlussfläche (18; 18') bestimmt ist, wobei eine Längsachse (L) des Verschlusselements (30; 30') in einer Einsetzrichtung (R_{E}) des Verschlusselements (30; 30') in die Antriebsmittelöffnung verläuft und die mindestens eine Elementfläche (32; 32') und/oder die mindestens eine Elementkante (34; 34') zumindest in einem Teilbereich parallel und die Abschlussfläche (18; 18') annähernd senkrecht zur Längsachse (L) des Verschlusselements (30; 30') angeordnet sind, wobei
in einer Mehrzahl der parallelen Teilbereiche der mindestens einen Elementfläche (32; 32') und/oder der mindestens einen Elementkante (34; 34') geometrische Vorsprünge (36; 36') vorgesehen sind, die sich senkrecht zur Längsachse (L) des Verschlusselements (30; 30') erstrecken, wodurch die Reibschlussverbindung des Verschlusselements (30; 30') erzielbar ist, ein geometrisches Übermaß des Verschlusselements (30; 30') bezogen auf Abmessungen der Antriebsmittelöffnung bestimmen, wobei
die geometrischen Vorsprünge (36; 36') aus einer Mehrzahl von Erhebungen und/oder krummlinigen Stegen oder Rippen und/oder aus nicht senkrecht, aber winklig zur Längsachse (L) des Verschlusselements (30; 30') orientierten, gerade verlaufenden Stegen oder Rippen bestehen.

4. Installationshalteelement (1; 1') gemäß einem der Ansprüche 1 bis 3, dessen Verschlusselemente (30; 30') jeweils über einen Steg mit dem Halteelement (10; 10') verbunden sind, der manuell unterbrechbar ist.

5. Installationshalteelement (1; 1') gemäß Anspruch 2, in dem das Halteelement (10; 10') eine Umfangsfläche bestimmte Breite aufweist und die Mehrzahl an Verschlusselementen (30; 30') gleichmäßig verteilt entlang der Umfangsfläche angeordnet ist.

6. Installationshalteelement (1; 1') gemäß einem der Ansprüche 1 bis 5, dessen Halteelement (10; 10') polygonal ausgebildet ist und an jeder polygonalen Seite und/oder Ecke ein Verschlusselement(30; 30') umfasst.

7. Installationshalteelement (1; 1') gemäß Anspruch 3, wobei die geometrischen Vorsprünge (36; 36') des Verschlusselements (30; 30') ein geometrisches Übermaß des Verschlusselements (30; 30') bezogen auf Abmessungen der Antriebsmittelöffnung bestimmen.

8. Installationshalteelement (1; 1') gemäß Anspruch 3 oder 7, wobei das Verschlusselement (30; 30') eine komplementär zur Antriebsmittelöffnung ausgebildete Form aufweist und die komplementäre Form an eine Torx, Kreuz- oder andere standardisierte Form einer Antriebsmittelöffnung angepasst ist, vorzugsweise einer Form eines in die Antriebsmittelöffnung eingreifenden Antriebsmittels oder Werkzeugs entspricht.

9. Installationshalteelement (1; 1') gemäß einem der Ansprüche 3, 7 oder 8, wobei das Verschlusselement (30; 30') aus einem Thermoplast, einem Duroplast, oder Elastomer mit oder ohne Faserverstärkung besteht.

10. Ein Installationsverfahren für ein Verschlusselement (30; 30') einer Antriebsmittelöffnung eines Verbindungselements, das die folgenden Schritte aufweist:
a. Aufnehmen (A) eines Installationshalteelements (1; 1')mit einem Griffbereich (12; 12') zur manuellen Handhabung und mit einer Mehrzahl lösbar befestigter Verschlusselemente(30; 30'), vorzugsweise das Installationshalteelement (1; 1') gemäß einem der Ansprüche 1 bis 9,
b. Ausrichten (B) eines Verschlusselements (30; 30') auf eine Antriebsmittelöffnung und Einsetzen des Verschlusselements (30; 30') in die Antriebsmittelöffnung über eine geradlinige Bewegung ohne Verwendung eines Werkzeugs und
c. Bewegen (D) des Installationshalteelements (1; 1') relativ zum eingesetzten Verschlusselement (30; 30') und dadurch Lösen des Verschlusselements (30; 30') vom Installationshalteelement (1; 1').

11. Installationsverfahren gemäß Anspruch 10, das des Weiteren aufweist:
manuelles Eindrücken des Verschlusselements (30; 30') in die Aufnahmeöffnung.

12. Installationsverfahren gemäß Anspruch 10 oder 11, das des Weiteren aufweist:
Drehen (E) des Installationshalteelements (1; 1') um eine Längsachse (L) des Verschlusselements (30; 30') und relativ zum Verschlusselement (30; 30') während das Verschlusselement (30; 30') in der Antriebsmittelöffnung gehalten wird.

13. Installationsverfahren gemäß einem der Ansprüche 10 bis 12, mit dem weiteren Schritt:
Drehen (E) des Installationshalteelements (1; 1') in einer Ebene eines Griffbereichs (12; 12') und Anordnen eines Verschlusselements (30; 30') in einer Installationsposition.

14. Herstellungsverfahren für ein Installationshalteelement (1; 1') mithilfe eines Spritzgussverfahrens, das die folgenden Merkmale aufweist:
a. Bereitstellen (I) einer Spritzguss- und/oder Pressform für ein Installationshalteelement (1; 1') gemäß Anspruch 1 und
b. Spritzgießen (II) des Installationshalteelements (1; 1') in der Spritzguss- und/oder Pressform und
c. Entformen (III) des Installationshalteelements (1; 1') aus der Spritzguss- und/oder Pressform.

15. Herstellungsverfahren gemäß Anspruch 14, mit dem weiteren Schritt:
Bereitstellen (I) einer Mehrzahl von Kunststoffen zum Spritzgießen (II), die unterschiedliche Farben aufweisen und/oder
Aufbringen einer Codierung auf einer Abschlussfläche (18; 18') des Verschlusselements (30; 30') zur Identifikation eines Verschlussvorgangs mit einem Verschlusselement (30; 30').

## Claims

1. Installation holding element (1; 1') by means of which a plurality of closure elements (30; 30') can be provided to a drive means opening of a connection element and can be installed in the drive means opening of the connection element manually without tool, which comprises the following features:
a. a holding element (10; 10'), at which the plurality of closure elements (30; 30') is fastened integrally and releasably, wherein
b. the holding element (10; 10') comprises a handle portion (12; 12') by means of which an individual closure element (30; 30') is installable without tool by means of a manual handling of the installation holding element (1; 1') in a receiving opening of a connection element and is releasable from the holding element (10; 10').

2. Installation holding element (1; 1') according to claim 1, the holding element (10; 10') of which has an areal shape so that the areal shape provides a manual engagement surface for moving, especially for rotating, the installation holding element (1; 1').

3. Installation holding element (1; 1') according to claim 1 or 2, in which the closure element (30; 30') can be pressed into the drive means opening parallel to its longitudinal axis (L) manually without tool and is fastenable therein only be means of a frictional connection, wherein
the closure element (30; 30') comprises a shape which is defined by at least one element surface (32; 32') and/or at least one element edge (34; 34') as well as one terminal surface (18; 18'), wherein a longitudinal axis (L) of the closure element (30; 30') extends into the drive means opening in an insertion direction (R_{E}) of the closure element (30; 30') and the at least one element surface (32; 32') and/or the at least one element edge (34; 34') are arranged at least in a subarea parallel to the longitudinal axis (L) of the closure element (30; 30') and the terminal surface (18; 18') is arranged almost perpendicular to the longitudinal axis (L) of the closure element (30; 30'), wherein
in a plurality of the parallel subareas of the at least one element surface (32; 32') and/or the at least one element edge (34; 34'), geometric protrusions (36; 36') are provided, which extend perpendicular to the longitudinal axis (L) of the closure element (30; 30'), whereby the frictional connection of the closure element (30; 30') is achievable, defining a geometric interference of the closure element (30; 30') with respect to dimensions of the drive means opening, wherein
the geometric protrusions (36; 36') consist of a plurality of elevations and/or curvilinear webs or ribs and/or of non-perpendicular webs or ribs but angularly oriented with respect to the longitudinal axis (L) of the closure element (30; 30') and extending straightly.

4. Installation holding element (1; 1') according to one of the claims 1 to 3, the closure elements (30; 30') of which are each connected to the holding element (10; 10') by means of a web which can be interrupted manually.

5. Installation holding element (1; 1') according to claim 2, wherein the holding element (10; 10') comprises a circumferential surface of a specific width and the plurality of closure elements (30; 30') is arranged evenly distributed along the circumferential surface.

6. Installation holding element (1; 1') according to one of the claims 1 to 5, the holding element (10; 10') of which is formed polygonal and comprises a closure element (30; 30') at each polygonal side and/or edge.

7. Installation holding element (1; 1') according to claim 3, wherein the geometric protrusions (36; 36') of the closure element (30; 30') define a geometric interference of the closure element (30; 30') with respect to dimensions of the drive means opening.

8. Installation holding element (1; 1') according to claim 3 or 7, wherein the closure element (30; 30') comprises a shape formed complementary to the drive means opening and the complementary shape is adapted to a Torx, a Phillips or crosshead, or another standardized shape of a drive means opening, preferably it corresponds to a shape of a drive means or tool engaging the drive means opening.

9. Installation holding element (1; 1') according to one of the claims 3, 7 or 8, wherein the closure element (30; 30') consists of a thermoplastic, a duroplast or elastomer with or without fiber reinforcement.

10. An installation method for a closure element (30; 30') of a drive means opening of a connection element which comprises the following steps:
a. grabbing (A) an installation holding element (1; 1') having a handle portion (12; 12') for the manual handling and with a plurality of releasably fastened closure elements (30; 30'), preferably the installation holding element (1; 1') according to one of the claims 1 to 9,
b. aligning (B) a closure element (30; 30') with a drive means opening and inserting the closure element (30; 30') into the drive means opening by means of a linear movement without using a tool, and
c. moving (D) the installation holding element (1; 1') relative to the inserted closure element (30; 30') and thereby releasing the closure element (30; 30') from the installation holding element (1; 1').

11. Installation method according to claim 10 which further comprises:
manually pressing the closure element (30; 30') into the receiving opening.

12. Installation method according to claim 10 or 11 which furthermore comprises:
rotating (E) the installation holding element (1; 1') about a longitudinal axis (L) of the closure element (30; 30') and relative to the closure element (30; 30') while the closure element (30; 30') is retained in the drive means opening.

13. Installation method according to one of the claims 10 to 12, comprising the further step:
rotating (E) the installation holding element (1; 1') in a plane of a handle portion (12; 12'), and arranging a closure element (30; 30') in an installation position.

14. Production method for an installation holding element (1; 1') by means of an injection molding method which comprises the following features:
a. providing (I) an injection mold and/or press mold for an installation holding element (1; 1') according to claim 1, and
b. injection molding (II) the installation holding element (1; 1') in the injection mold and/or press mold, and
c. demolding (III) the installation holding element (1; 1') from the injection mold and/or press mold.

15. Production method according to claim 14, comprising the further step:
providing (I) a plurality of plastics for injection molding (II) having different colors and/or
applying a coding onto a terminal surface (18; 18') of the closure element (30; 30') for identifying a closure proceeding with a closure element (30; 30').

## Revendications

1. Élément de retenue d'installation (1 ; 1') permettant de fournir de multiples éléments de fermeture (30 ; 30') d'une ouverture de moyen d'entraînement d'un élément de raccordement et de les installer manuellement sans outil dans l'ouverture d'un moyen d'entraînement de l'élément de raccordement, qui présente les caractéristiques suivantes :
a) un élément de retenue (10 ; 10'), sur lequel les multiples éléments de fermeture (30 ; 30') sont fixés intégralement et de manière amovible, dans lequel
b) l'élément de retenue (10 ; 10') comprend une zone de préhension (12 ; 12') permettant d'installer un élément de fermeture séparé (30 ; 30') sans outil moyennant une manipulation manuelle de l'élément de retenue d'installation (1 ; 1') dans une ouverture réceptrice d'un élément de raccordement et de le détacher de l'élément de retenue (10 ; 10').

2. Élément de retenue d'installation (1 ; 1') selon la revendication 1, dont l'élément de retenue (10 ; 10') présente une forme plane, de sorte que la forme plane fournit une surface d'attaque manuelle pour déplacer, notamment pour faire pivoter, l'élément de retenue d'installation (1 ; 1').

3. Élément de retenue d'installation (1 ; 1') selon la revendication 1 ou 2, dans lequel l'élément de fermeture (30 ; 30') peut être enfoncé manuellement sans outil dans l'ouverture d'un moyen d'entraînement parallèlement à son axe longitudinal (L) et ne peut y être fixé que moyennant une liaison par friction,
l'élément de fermeture (30 ; 30') présente une forme, qui est déterminée par au moins une surface d'élément (32 ; 32') et / ou au moins un bord d'élément (34 ; 34') ainsi qu'une surface terminale (18 ; 18'), dans lequel un axe longitudinal (L) de l'élément de fermeture (30 ; 30') s'étend dans une direction de pose (RE) de l'élément de fermeture (30 ; 30') à l'intérieur de l'ouverture d'un moyen d'entraînement et ladite surface d'élément (32 ; 32') au moins et / ou ledit bord d'élément (34 ; 34') au moins sont disposés au moins dans une zone partielle parallèlement à l'axe longitudinal (L) de l'élément de fermeture (30 ; 30') et la surface terminale (18 ; 18') est disposée à peu près perpendiculairement à l'axe longitudinal (L) de l'élément de fermeture (30 ; 30'), dans lequel
des épaulements géométriques (36 ; 36') sont prévus dans de multiples zones partielles parallèles de ladite surface d'élément (32 ; 32') au moins et / ou dudit bord d'élément (34 ; 34') au moins, qui s'étendent perpendiculairement à l'axe longitudinal (L) de l'élément de fermeture (30 ; 30'), moyennant quoi la liaison par friction de l'élément de fermeture (30 ; 30') est réalisable, qui déterminent une surcote géométrique de l'élément de fermeture (30 ; 30') rapportée aux dimensions de l'ouverture d'un moyen d'entraînement, dans lequel
les épaulements géométriques (36 ; 36') sont constitués de multiples saillies et / ou de nervures ou de barrettes curvilignes et / ou de nervures ou de barrettes s'étendant linéairement, orientées non perpendiculairement, mais sous un certain angle par rapport à l'axe longitudinal (L) de l'élément de fermeture (30 ; 30').

4. Élément de retenue d'installation (1 ; 1') selon l'une des revendications 1 à 3, dont les éléments de fermeture (30 ; 30') sont reliés respectivement à l'élément de retenue (10 ; 10') au moyen d'une barrette, qui peut être interrompue manuellement.

5. Élément de retenue d'installation (1 ; 1') selon la revendication 2, dans lequel l'élément de retenue (10 ; 10') présente une surface périphérique d'une largeur définie et les multiples éléments de fermeture (30 ; 30') sont disposés de manière à être répartis uniformément le long de la surface périphérique.

6. Élément de retenue d'installation (1 ; 1') selon l'une des revendications 1 à 5, dont l'élément de retenue (10 ; 10') est conçu sous une forme polygonale et comprend un élément de fermeture (30 ; 30') sur chaque côté et / ou coin de polygone.

7. Élément de retenue d'installation (1 ; 1') selon la revendication 3, dans lequel les épaulements géométriques (36 ; 36') de l'élément de fermeture (30 ; 30') déterminent une surcote géométrique de l'élément de fermeture (30 ; 30') rapportée aux dimensions de l'ouverture d'un moyen d'entraînement.

8. Élément de retenue d'installation (1 ; 1') selon la revendication 3 ou 7, dans lequel l'élément de fermeture (30 ; 30') présente une forme conçue de manière complémentaire à l'ouverture d'un moyen d'entraînement et la forme complémentaire est adaptée à une empreinte Torx, cruciforme ou à une autre forme normalisée d'une ouverture de moyen d'entraînement, de préférence correspond à une forme d'un outil ou d'un moyen d'entraînement en prise dans l'ouverture d'un moyen d'entraînement.

9. Élément de retenue d'installation (1 ; 1') selon l'une des revendications 3, 7 ou 8, dans lequel l'élément de fermeture (30 ; 30') est constitué d'une matière thermoplastique, d'une matière thermodurcissable ou d'un élastomère avec ou sans fibres de renfort.

10. Un procédé d'installation d'un élément de fermeture (30 ; 30') d'une ouverture de moyen d'entraînement d'un élément de raccordement, qui présente les étapes suivantes :
a) la réception (A) d'un élément de retenue d'installation (1 ; 1') avec une zone de préhension (12 ; 12') servant à la manipulation manuelle et avec de multiples éléments de fermeture (30 ; 30') fixés de manière amovible, de préférence l'élément de retenue d'installation (1 ; 1') selon l'une des revendications 1 à 9,
b) l'alignement (B) d'un élément de fermeture (30 ; 30') sur une ouverture d'un moyen d'entraînement et l'insertion de l'élément de fermeture (30 ; 30') dans l'ouverture d'un moyen d'entraînement moyennant un déplacement linéaire sans utilisation d'outil et
c) le déplacement (D) de l'élément de retenue d'installation (1 ; 1') par rapport à l'élément de fermeture (30 ; 30') inséré et, ce faisant, le détachement de l'élément de fermeture (30 ; 30') de l'élément de retenue d'installation (1 ; 1').

11. Procédé d'installation selon la revendication 10, qui présente encore l'étape suivante :
l'enfoncement manuel de l'élément de fermeture (30 ; 30') dans l'ouverture réceptrice.

12. Procédé d'installation selon la revendication 10 ou 11, qui présente encore l'étape suivante :
le pivotement (E) de l'élément de retenue d'installation (1 ; 1') autour d'un axe longitudinal (L) de l'élément de fermeture (30 ; 30') et par rapport à l'élément de fermeture (30 ; 30') pendant que l'élément de fermeture (30 ; 30') est maintenu dans l'ouverture d'un moyen d'entraînement.

13. Procédé d'installation selon l'une des revendications 10 à 12, présentant l'autre étape :
le pivotement (E) de l'élément de retenue d'installation (1 ; 1') dans un plan d'une zone de préhension (12 ; 12') et la disposition d'un élément de fermeture (30 ; 30') dans une position d'installation.

14. Procédé de fabrication d'un élément de retenue d'installation (1 ; 1') à l'aide d'un procédé de moulage par injection, qui présente les caractéristiques suivantes :
a) la fourniture (I) d'une matrice et / ou d'un moule pour injection d'un élément de retenue d'installation (1 ; 1') selon la revendication 1 et
b) le moulage par injection (II) de l'élément de retenue d'installation (1 ; 1') dans la matrice et / ou le moule pour injection et
c) le démoulage (III) de l'élément de retenue d'installation (1 ; 1') hors de la matrice et / ou du moule pour injection.

15. Procédé de fabrication selon la revendication 14, présentant l'autre étape :
la fourniture (I) de multiples matières plastiques servant au moulage par injection (II), qui revêtent différentes couleurs et / ou
l'application d'un codage sur une surface terminale (18 ; 18') de l'élément de fermeture (30 ; 30') pour identifier un processus de fermeture avec un élément de fermeture (30 ; 30').
